# EUROPÄISCHE PATENTSCHRIFT

(11) **EP 3 652 656 B1**
(45) Veröffentlichungstag und Bekanntmachung des Hinweises auf die Patenterteilung: **09.06.2021**
(21) Anmeldenummer: 18746590.1
(22) Anmeldetag: 09.07.2018
(51) Int. Cl.: H04L 9/32, G06F 16/901

(54) **VORRICHTUNGEN ZUM BEREITSTELLEN EINER MENGE VON KRYPTOGRAPHISCH GESCHÜTZTEN UND GEFILTERTEN SOWIE SORTIERTEN TRANSAKTIONSDATENSÄTZEN EINES GLIEDES EINER BLOCKKETTE**
DEVICES TO PROVIDE A QUANTITY OF CRYPTOGRAPHICALLY PROTECTED AND FILTERED AS WELL AS SORTED TRANSACTION DATASETS OF A LINK OF A BLOCK CHAIN
DISPOSITIFS DESTINÉS À FOURNIR UNE QUANTITÉ D'ENREGISTREMENTS UNITAIRES DE TRANSACTIONS, PROTÉGÉS DE MANIÈRE CRYPTOGRAPHIQUE ET FILTRÉS AINSI QUE TRIÉS, D'UN MAILLON D'UNE CHAÎNE DE BLOCS

(30) Priorität: 18.08.2017 EP 17186826; 11.06.2018 WO PCT/EP2018/065299
(43) Veröffentlichungstag der Anmeldung: 20.05.2020
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2018/068475
(87) Internationale Veröffentlichungsnummer: WO 2019/034329

(56) Entgegenhaltungen:
- YUAN YONG ET AL: "Towards blockchain-based intelligent transportation systems", 2016 IEEE 19TH INTERNATIONAL CONFERENCE ON INTELLIGENT TRANSPORTATION SYSTEMS (ITSC), IEEE, 2. November 2016 (2016-11-02), Seiten 2663-2668, XP055515223, DOI: 10.1109/ITSC.2016.7795984
- LOI LUU ET AL: "SmartPool: Practical Decentralized Pooled Mining", IACR, INTERNATIONAL ASSOCIATION FOR CRYPTOLOGIC RESEARCH , Bd. 20170629:173148 29. Juni 2017 (2017-06-29), Seiten 1-18, XP061023749, Gefunden im Internet: URL:http://eprint.iacr.org/2017/019.pdf [gefunden am 2017-06-29]

## Beschreibung

Die Erfindung bezieht auf Vorrichtungen zum Bereitstellen einer Menge von kryptographisch geschützten und gefilterten sowie sortierten Transaktionsdatensätzen eines Gliedes einer Blockkette sowie ein Verfahren zum Bilden einer Menge der sortierten Transaktionsdatensätzen und eine dazugehörige Kommunikationsnetzanordnung und ein dazugehöriges Computerprogrammprodukt.

### Hintergrund

werden. Dadurch ist in der Blockchain eine große Anzahl von Transaktionen unterschiedlicher Art enthalten. Wenn eine Blockchain für industrielle Anwendungen z.B. zur Steuerung eines Smart Energy Grids (intelligentes Energienetz), verwendet wird, müssen Knoten des Netzes eine Vielzahl von für sie nicht relevanten Transkationen bearbeiten.

Die Technologie von Blockketten (engl. Blockchains bzw. Block Chains) bzw. "Distributed Ledgers" ist aktuell ein intensiv diskutierte Technologie. Sie wird unter anderem in https://en.wikipedia.org/wiki/Blockchain (database) beschrieben.

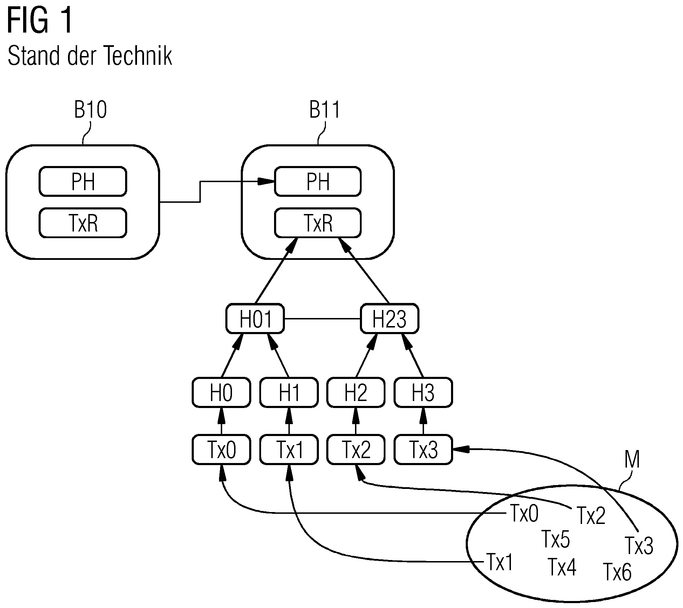

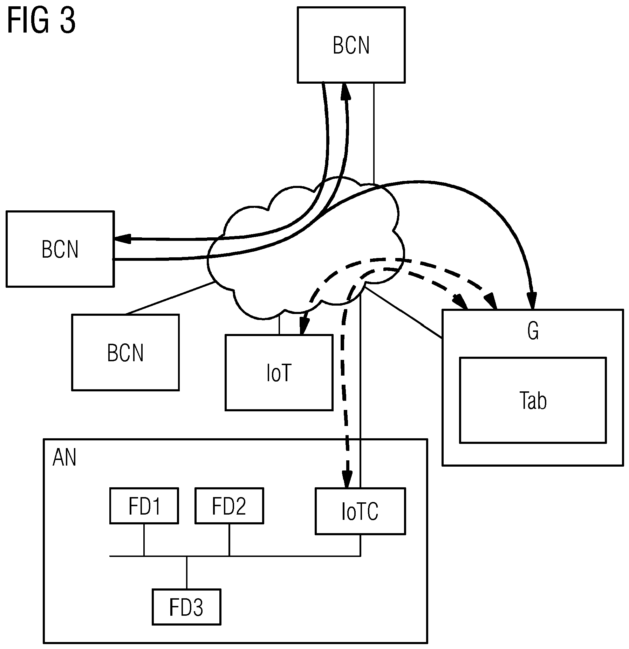

Figur 1 zeigt ein Beispiel für eine solche Blockkette. Unter einer Blockkette bzw. Blockchain wird im allgemeinen eine Datenbank verstanden, deren Integrität (Sicherung gegen nachträgliche Manipulation) durch Speicherung des Einwegfunktionswertes PH, auch Hashwert genannt, des vorangehenden Datensatzes bzw. Blocks bzw. Glieds B10 im jeweils nachfolgenden Glieds B11 , also durch kryptographische Verkettung, gesichert ist. Der Schutz entsteht durch eine Mehrheit von vertrauenswürdigen, beispielhaft in Figur 3 dargestellten Knoten BCN in einem Blockchain-Netzwerk N, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block z.B. B11 gebildet und dabei der Hashwert PH eines bestehenden Blockes mit hinterlegt. Dabei wird aus einer Menge M von Transaktionen z.B. Tx0, Tx1, Tx2, Tx3, Tx4, Tx5 und Tx6 eine vorgebbare Anzahl, im Beispiel 4, an Transaktionen z.B. Tx0, Tx1, Tx2 und Tx3 ausgewählt und in beliebiger, allenfalls in einer syntaktischen Reihenfolge der Nummerierung von 0 bis 3 nach in einen Hash-Baum als Blätter eingehängt. Als Hashbäume ist beispielsweise die Verwendung von Merkle Tree oder Patricia Tree üblich. Der Wurzelknoten TxR eines solchen Hashbaums ist in einem Block z.B. B11 verankert.

Einmal in der Block-Kette auftauchende Transaktionen Tx0, Tx1, Tx2, Tx3 sind nicht mehr unbemerkt veränderbar. Bei diesem Mining-Prozess wird die Gültigkeit bzw. die Integrität von im Block zu hinterlegenden Transaktionen geprüft. Mit Hilfe eines Transaktionsdatensatzes kann die Transaktion ausgeführt werden. Unter einer Transaktion wird eine gegenseitige Übertragung von virtuellen oder realen Gütern bzw. einer Zahlung (z.B. mittels Bitcoin oder Ethereum) oder anderen Informationen von einem Sender zu einem Empfänger verstanden. Bei Bitcoin wird eine relativ einfache stackbasierte Laufzeitumgebung verwendet, um die Zulässigkeit einer Transaktion zu prüfen. Eine Transaktion umfasst dabei die Prüfsumme zur Überprüfung der Gültigkeit der Transaktion. Die Blockchain-Plattform Ethereum unterstützt eine frei programmierbare Laufzeitumgebung, sodass der Programmcode einer Blockchain flexibel realisiert werden kann. Dabei wird z. B. eine Geschäftslogik als Programmcode im Transaktionsdatensatz und damit in der Blockchain oder in einem Blockchain-Infrastrukturknoten hinterlegt. So gesehen ist die auszuführende Transaktion in einem (Ketten-)Glied der Blockchain hinterlegt. Demnach ist in diesem Zusammenhang eine Unterscheidung zwischen der auszuführenden Transaktion und dem Transaktionsdatensatz, der zur Ausführung der Transaktion ausgestaltet ist, kaum möglich.

Bei Blockchains ist es möglich, dass manche Knoten einen Block vollständig validieren, d.h. alle Transaktionen eines Blocks überprüfen. Da dies aufwendig ist, sind auch "Simple Validation Nodes" denkbar, die nur einzelne Transaktionen validieren. Dazu sollten sie jeweils den Pfad durch den Hashbaum der betroffenen Transaktionen durchforsten und überprüfen.

Neben einem Mining-Prozess als "Proof of Work" sind auch Alternativen bekannt, insbesondere ein "Proof of Stake", bei dem ein Block durch einen pseudozufällig, aber deterministisch ausgewählten Blockketten-Knoten bestätigt wird, oder eine zugangskontrollierte Blockkette (permissioned Blockchain). Ein Blockchain geschützter und somit kryptographisch geschützter Transaktionsdatensatz umfasst im allgemeinen Programmcode. Unter dem Begriff "Smart Contract" wird ein Programmcode verstanden, in dem zum Erstellungszeitpunkt Bedingungen definiert und zu seiner Laufzeit ausgewertet werden können, so dass bestimmte Transaktionen in einer bestimmten (Geldbetrags-)Höhe an einen bestimmten oder mehrere bestimmte Empfänger durchgeführt werden können oder nicht. XP055515223 beschreibt ein Blockchainsystem mit einem Consensus-Algorithmus.

Eine Aufgabe der vorliegenden Erfindung ist es, Verfahren und Vorrichtungen bereitzustellen, welche eine effiziente bzw. verbesserte Bearbeitung der Transaktionen durch die Knoten ermöglichen, welche für die Knoten relevant sind.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul", "Mittel", "Einrichtung" und dergleichen können im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module/Mittel/Einrichtungen können beispielsweise auch als separate bzw. eigenständige Module/Mittel/Einrichtungen ausgebildet sein. Hierzu können die entsprechenden Module/Mittel/Einrichtungen beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweites Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft. Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Unter "Objekt" können im Zusammenhang mit der Erfindung beispielsweise Geräte, elektronische Geräte, elektronische Bauteile, elektronische Kommunikationsgeräte (z. B. ein Mobiltelefon), technische Anlagen, Gebäude oder technische Systeme verstanden werden, die insbesondere jeweils mindestens ein elektronisches Bauteil umfassen, dessen Zustand vorzugsweise durch einen Sensor erfassbar ist. Insbesondere ist dabei eine Zustandsänderung des Zustands des Objektes bzw. des elektronischen Bauteil des Objektes ebenfalls durch den Sensor erfassbar. Insbesondere kann sich die Zustandsänderung bzw. der Zustand auch auf nicht-elektronische Bauteile des Objektes beziehen. Dies kann beispielsweise eine Änderung einer Statik eines Gebäudes oder eine Verformung eines Metallteils sein (z. B. ein Rahmen) sein. Der Zustand bzw. die Zustandsänderung werden insbesondere rechnergestützt und/oder automatisiert erfasst und/oder mittels einer Schnittstelle dem Steuersystem bzw. dem verteilten Datenbanksystem bereitgestellt.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoinbasierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blocckette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.

Die Erfindung beansprucht ein Verfahren zum Bilden bzw. zum Erzeugen einer Menge von kryptographisch geschützten und semantisch sortierten Transaktionsdatensätzen einer Blockkette aus einer Menge von unsortierten Transaktionsdatensätzen, aufweisend folgende Schritte:
a) Bilden zumindest eines zweiten Gliedes einer Blockkette, welches mit einem ersten Glied derselben oder einer weiteren Blockkette verkettet worden ist oder verkettet wird,
b) Festlegen mindestens eines Suchbegriffs im zweiten Glied oder Auslesen mindestens eines zuvor festgelegten Suchbegriffs, welchen das zweite Glied umfasst,
c) Auswählen eines Transaktionsdatensatzes aus der Menge der unsortierten Transaktionsdatensätze, wobei der ausgewählte Transaktionsdatensatz auf Integrität geprüft worden ist,
d) Zuordnen des ausgewählten Transaktionsdatensatzes zu dem festgelegten oder ausgelesenen Suchbegriff oder zu einem der festgelegten oder ausgelesenen Suchbegriffe,
e) Wiederholen der Schritte b) bis d) bis eine vorgebbare Anzahl an auszuwählender Transaktionsdatensätze erreicht ist und/oder die Menge der unsortierten Transaktionsdatensätze leer ist,
f) Semantisches Sortieren der ausgewählten und zugeordneten Transaktionsdatensätze anhand eines vorgebbaren Sortierkriteriums, wobei die zugeordneten Suchbegriffe in eine dem Sortierkriterium entsprechende Reihenfolge gebracht werden, und
g) Bilden der Menge der kryptographisch geschützten und semantisch sortierten Transaktionsdatensätzen mit Hilfe der genannten Reihenfolge.

Das Verfahren ist derart wiederholbar, dass letztendlich mehrerer Glieder beginnend mit einem Startglied, das auch das Ursprungsglied (Genesis-Glied) sein kann, gebildet bzw. erzeugt werden können, wobei jedes Glied für sich eine Überprüfungsfunktion der eingangs genannten Art oder Teilfunktionen davon entsprechend enthalten kann.

Unter semantisch sortiert wird im Zusammenhang mit der Erfindung verstanden, dass die Sortierung von der Bedeutung eines Suchbegriffes abhängt. Dabei kann die semantische Sortierung rein zufällig die gleiche Reihenfolge wie in der eingangs genannten syntaktischen Sortierung in der Anordnung der genannten Transaktionen ergeben. Dies ist jedoch in der Regel nicht der Fall. Die Reihenfolge der angeordneten Transaktionen fällt normalerweise semantisch anders als syntaktisch oder gar als unsortiert aus.

Ein Suchbegriff kann hierbei aus einem Oberbegriff und einen oder mehreren weiteren untergeordneten Untergriffen zusammengesetzt sein. Zwischen den Ober- und Unterbegriffe kann jeweils ein Trennzeichen z.B. "." eingefügt sein.

Bei mehreren festgelegten oder ausgelesenen Suchbegriffen in dem genannten zweiten Glied können diese in einem Suchbaum, vorzugsweise einem Hashbaum, angeordnet werden, wobei die Suchbegriffe die Knoten des Suchbaums bilden. Ein Suchbegriff kann auch hierarchisch mit dem Oberbegriff im Wurzelknoten des Suchbaums bis zu einem am weitetesten untergeordneten Unterbegriff im Blattknoten des Suchbaums angeordnet werden, wobei gegebenenfalls ein Trennzeichen eine zwischen den zugehörigen Knoten liegende Kante des Suchbaums kennzeichnet.

Der Suchbaums eines Glieds ist somit anhand von Suchbegriffen strukturiert.

Das Verfahren wird vorzugsweise rechnergestützt durchgeführt. Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, der Mittel oder anderer Aspekte und/oder Teilaspekte der Erfindung realisiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter Mittel kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Eine Blockchain kann effizienter durch Knoten, insbesondere Steuerrechner bzw. -geräte in einem Industriellen IoT-Umfeld (Internet of Things), verwendet werden. Außerdem wird das Echtzeitverhalten verbessert, da weniger nicht relevante Information von diesen Knoten inhaltlich ausgewertet werden muss. Dennoch kann eine gemeinsame Blockchain-Plattform für eine Vielzahl von unterschiedlichen Aufgaben verwendet werden, wodurch eine solche Blockchain-Plattform effizient betreibbar ist. Weiterhin kann die Blockketten-Plattform auf unterschiedlichen Hardware-Plattformen ausgeführt werden.

Ein weiterer Aspekt der Erfindung ist eine Vorrichtung zum Bereitstellen einer Menge von kryptographisch geschützten und gefilterten Transaktionsdatensätzen aus einer Menge von auf Integrität geprüften und semantisch sortierten Transaktionsdatensätzen eines Gliedes einer Blockkette, welches nach dem Verfahren nach einem der vorhergehenden Verfahrensansprüche gebildet ist, aufweisend:
- Bereitstellungsmittel zum Bereitstellen zumindest eines solchen Gliedes einer Blockkette und
- Kopplungsmittel zur Kopplung der Bereitstellungsmittel mit einer Filterungseinrichtung, welche die Menge von gefilterten Transaktionsdatensätzen aus der Menge der geprüften und semantisch sortierten Transaktionsdatensätzen der Blockkette mit Hilfe eines Filterkriteriums ermittelt, und
- Ausgabemittel zum Bereitstellen der ermittelten Menge von gefilterten Transaktionsdatensätzen.

Unter "Bereitstellen" kann im Zusammenhang mit der Erfindung beispielsweise ein Erstellen, Laden oder ein Speichern, des Transaktionsdatensatzes auf oder von einem Datenträger bzw. Plattform verstanden werden.

Mit Hilfe des Filterkriteriums wird eine einfache Filterung der relevanten Transaktionen eines Blockchain-Blocks ermöglicht. Das Filterkriterium kann derart organisiert sein, dass ein Knoten somit nicht den ganzen Suchbaum mit allen Transaktionen bearbeiten, sondern gezielt einen Teilbaum ermitteln kann, der die für ihn relevanten Transaktionen enthält.

Das Filterkriterium als eine Art "Publish-Subscibe"-Kriterium ausgebildet sein. Es sind Publish-Subscribe-Protokolle, z.B. MQTT, XMPP, OPC UA PubSub, einsetzbar. Dabei publizieren sogenannte Publisher-Knoten Nachrichten, Subscriber, z.B. Geräte einer Gruppe empfangen Nachrichten. Suchbegriffe identifizieren Themen von Nachrichten. Ein Publisher (Veröffentlichungsknoten) gibt das Thema (Topic bzw. Suchbegriff) einer Nachricht an, Subscriber abonnieren die Nachrichten bestimmter Themen. Die Nachrichten werden beispielsweise durch einen Message Broker vermittelt. Die Suchbegriffe sind dabei allgemein hierarchisch beispielsweise mit der oben genannten Suchbaum-Ausführungsform strukturiert.

Ein weiterer Aspekt der Erfindung ist eine Filterungseinrichtung geeignet zur Kopplung mit den Bereitstellungsmitteln der vorgenannten Vorrichtung, gekennzeichnet durch Ermittlungsmittel zum Ermitteln einer Menge von gefilterten Transaktionsdatensätzen aus der Menge der auf Integrität geprüften und sortierten Transaktionsdatensätzen einer Blockkette mit Hilfe des Filterkriteriums.

Eine Ausführungsform der Filterungseinrichtung sieht vor, dass das Filterkriterium mit Hilfe eines weiteren Suchbegriffs und/oder zumindest eines Teils des weiteren Suchbegriffes festlegbar ist, welcher mit dem Suchbegriff in dem bereitgestellten Glied der Blockkette identisch ist oder von diesem ableitbar ist oder abgeleitet ist. Der weitere Suchbegriff kann ein Topic der oben bereits erläuterten Art (Publish-Subscribe) sein, welcher einem Suchbegriff im Suchbaum zugeordnet oder ggf. mit diesem identisch ist. Die Zuordnung bzw. Ableitung kann dann mittels einer Zuordnungstabelle (Suchbegriff - Topic) durchgeführt werden.

Ein weitere Aspekt der Erfindung ist eine Zugangseinheit umfassend eine Filterungseinrichtung der oben genannten Art, dadurch gekennzeichnet, dass der weitere Suchbegriff von einem Gerät oder mehreren Geräten einer Gruppe festlegbar und/oder insofern abonnierbar ist, dass die dem Suchbegriff zugeordneten Transaktionsdatensätze von diesen abonniert werden, und nur die Glieder der Blockkette an das Gerät oder die mehreren Geräte weitergereicht werden, welche die festgelegten und/oder abonnierten Transaktionsdatensätze aufweisen. Somit ist die Zugangseinheit eine Art Gateway insbesondere für die Geräte, vorzugsweise für IoT-Geräte (welche oft keine Blockketten verarbeiten können). Über eine Benutzerschnittstelle (UI) können die weiteren Suchbegriffe bzw. Topics festgelegt werden. Die Suchgebegriffe können auch als Projektierungsdaten für eine industrielle Anlage vorgebeben sein. Dann kann das Gerät bestimmte weitere Suchbegriffe abonnieren. Die Transaktionen, die zu dem weiteren Suchbegriff passen, werden gefiltert und nur diese für das genannte Gerät ausgeführt oder dem Gerät zur Verfügung gestellt.

Ein weiterer Aspekt der Erfindung ist eine Kommunikationsnetzanordnung umfassend folgende Komponenten:
- zumindest einen eine Blockketten verarbeitenden Netz-Knoten, welcher jeweils eine Vorrichtung der oben genannten Art aufweist,
- ein oder mehrere Geräte, die einer Gruppe zugeordnet sind,
- wenigstens eine Filterungseinrichtung der oben genannten Art oder wenigstens eine Zugangseinheit nach der oben genannten Art, und
- umfassend eine Netzwerkinfrastruktur, mit Hilfe derer die genannten Komponenten miteinander kommunizieren können.

In der Netzwerkinfrastruktur kann ein Publish-Subscribe-Protokoll beispielsweise der bereits oben erläuterten Art angewendet werden, bei dem die Filterungseinrichtung dazu ausgelegt ist, dem einen oder mehreren Geräten der Gruppe das Abonnieren und/oder Festlegen von Suchbegriffen zu ermöglichen.

Die Netzwerkinfrastruktur kann so ausgebildet sein, dass die genannten Komponenten drahtgebunden oder drahtlos über eine Luftschnittstelle miteinander kommunizieren können. Die Luftschnittstelle kann gemäß des Standards GSM, UMT, LTE, 5G, WLAN, Zigbee, Bluetooth bzw. NFC etc. ausgebildet sein.

Die Vorrichtungen, Einrichtungen bzw. Anordnungen können entsprechend der Weiterbildungen und Ausführungsformen des oben genannten Verfahrens weitergebildet werden.

Des Weiteren wird Computerprogramm(-produkt) mit Programmbefehlen für einen eine Blockkette verarbeitenden Netz-Knoten, insbesondere der eingangs genannten Art, der mittels der Programmbefehle konfiguriert wird, die zum Ausführen des Verfahrens nach einem der vorangehenden Verfahrensansprüche geeignet sind.

Zusätzlich kann eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, vorgesehen sein.

Die Verwendungen, Vorrichtungen und Computerprogramm(-produkte) können entsprechend der Weiterbildungen/Ausführungsformen des oben genannten Verfahrens und dessen Weiterbildungen/Ausführungsformen ausgebildet sein.

Darüber hinaus ist eine Bereitstellungsvorrichtung zum Speichern und/oder Bereitstellen des Computerprogrammprodukts möglich. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert ist, dass diese das Glied und/oder die Blockkette erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
Fig. 1 ein Ausführungsbeispiel als Blockkette gemäß des Standes der Technik;
Fig. 2 ein erfindungsgemäßes Ausführungsbeispiel eines oder mehrere in ein Glied einer Blockkette eingebunden Transaktionsdatensatzes/Transaktionsdatensätze;
Fig. 3 ein Ausführungsbeispiel, wie die Erfindung in eine Netzwerkinfrastruktur eingebettet sein kann,
Fig. 4 ein Ablaufdiagramm zum erfindungsgemäßen Verfahren.

In den Figuren sind funktionsgleiche Elemente mit denselben Bezugszeichen versehen, sofern nichts anderes angegeben ist.

Wie eingangs schon beschrieben, zeigt die Fig. 1 die Glieder, beispielsweise ein erstes Glied B10, ein zweites Glied B11 einer Blockkette. Die Glieder umfassen jeweils mehrere Transaktionen Tx0 bis Tx3. Der Hash-Wert PH, der abhängig vom Vorgänger-Glied gebildet wird, kann insbesondere ein kryptographischer Hash-Wert sein, der z.B. mittels SHA2-256, SHA2-384, SHA-3, BLAKE2 bestimmbar ist.

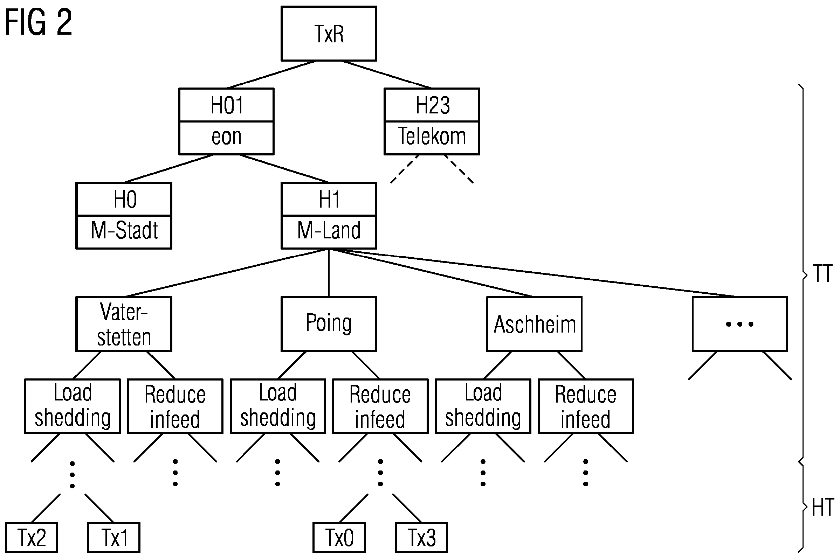

Die Fig. 2 zeigt ein Ausführungsbeispiel eines oder mehrerer in ein Glied einer Blockkette eingebunden Transaktionsdatensatzes/Transaktionsdatensätze.

Die Glieder können jeweils zu ihren Transaktionen T einen Hash(funktions)-Wert umfassen, der als Wurzelhashwert TxR eines Hashbaums TT dienen kann. Der Hashbaum, auch Suchbaum genannt, ist derart ausgebildet, dass er sowohl einen Hashwert z.B. H01, H23 zum nächsten Knoten mit den Hashwerten H0 und H1 des Hashbaums TT als auch mindestens einen Suchbegriff - wie in der Figur 2 gezeigt - "eon" oder "Telekom". Der Knoten mit H0 weist den Suchbegriff "M-Stadt" und der Knoten mit H1 den Suchbegriff z.B. als ein Oberbegriff "M-Land" auf. Es sind weitere Knoten von dem Knoten mit H1 ausgehend abgebildet, die Unterbegriffe wie z.B. Orte "Vaterstetten", "Poing" bzw. "Aschheim" aufweisen. Auch diese Knoten enthalten jeweils einen Hashwert, der in der Fig.2 nicht dargestellt ist. An den Blättern des Hashbaums TT sind mögliche Transaktionsbezeichnungen - wie in Figur 2 dargestellt - "Load shedding" (Lastabwurf), "Reduce infeed" (Verringere Einspeisung) vorgesehen, die quasi die Wurzel eines folgenden Hashbaums HT, im Beispiel als Merkle-Tree ausgebildet, darstellen. Die weiteren Knoten des Merkle-Tree sind in Figur 2 nicht dargestellt. Es werden an den Blättern des Merkle-Tree die Transaktionen Tx2, Tx1 und Tx0, Tx3 gezeigt, die im Merkle-Tree durch semantisches Sortieren aus einer unsortierten Menge M (siehe Fig.1) von Transaktionen an die dort gezeigten Positionen gelangt sind. Mit anderen Worten ausgedrückt, wird der Hashbaum HT (z.B. Merkle Tree, Patricia Tree o.ä.) eines Glieds sortiert, d.h. die Transaktionen eines Glieds werden sortiert. Dadurch befinden sich alle Transaktionen, die ein gemeinsames Sortierkriterium (Suchbegriff) erfüllen, in einem Ast des Baums.

Dies hat den Vorteil, dass die Transaktionen eines "Suchbegriffs" effizient überprüfbar sind. Ein Knoten BCN (siehe Figur 3) kann den Teilbereich des Baums HT laden und prüfen, der die Transaktionen dieses Suchbegriffs umfasst. Dadurch können unterschiedliche Arten von Transaktionen einfach unterschieden werden. Ein Knoten, der nur bestimmte Arten von Transaktionen auswerten möchte, kann gezielt den oder diejenigen Teile des Baums HT bearbeiten, in denen relevante Transaktionen enthalten sind.

Die Struktur des Baums HT kann fest vorgegeben sein, oder sie kann adaptiv bestimmt werden (je Block oder in größeren Zeitspannen). Weiterhin kann die Struktur des Baums HT (d.h. die Sortierung) als Transaktion in der Blockchain bekannt gemacht werden. Dadurch ist die Information einfach auswertbar und kann ggf. angepasst werden.

Auf diese Weise ist eine Auswertung der Blockchain-Transaktionen auch für Knoten IoT, z.B. im Internet of Things, effizient möglich. Die Transaktionen zu einem "Suchbegriff" sind demnach nicht beliebig im Merkle-Tree verteilt.

Nach Figur 3 ist ein Gerät z.B. IoT, das einer Gruppe AN z.B. einem Energienetz zugeordnet, welches z.B. ein Topic "eon.M-Land.Poing.Reduceinfeed" abonniert hat, dann wird für dieses Gerät nur die Transaktion Tx0 und Tx1 aus dem semantisch sortierten Merkle-Tree gefiltert und gegebenenfalls ausgeführt.

Das Topic bzw. der Suchbegriff ist im Beispiel der Figur 2 aus dem Oberbegriff "eon" und weiteren untergeordneten Unterbegriffen "M-Land" und "Poing" und letztendlich mit der Transaktionsbezeichnung "Reduceinfeed" mit einem Punkt-Trennzeichen zwischen den Begriffen zusammengesetzt. Ein solches Trennzeichen könnte im Baum TT eine Kante zwischen den Knoten "eon" und den Knoten"M-Land" kennzeichnen. Analog könnten alle Kanten des Baums TT mit Trennzeichen markiert sein.

Figur 3 zeigt beispielhaft eine Kommunikationsnetzanordnung umfassend Knoten BCN, die eine Blockkette (verteilte Datenbank) realisieren können, die über eine Netzwerkinfrastruktur N miteinander kommunizieren können, das durch die Pfeile angedeutet ist. Zudem ist das oben erwähnte Gerät IoT vorgesehen. Die Gruppe AN umfasst beispielsweise weitere Geräte FD1, FD2, FD3 sowie einen IoT-Kontroller IoTC, der mit dem Gerät IoT in Verbindung steht. Des Weiteren ist ein Gateway G in der Kommunikationsanordnung vorgesehen. Dieses kann z.B. als Server, Appliance oder als Cloud-basierter Dienst (z.B. eine spezielle App für eine Industrie-Plattform) realisiert sein. Das Gateway G erzeugt aus einer von einem Publisher bereitgestellten Message eines Publish-Subscribe-Protokoll (z.B. XMPP, MQTT, AMQP, OPC UA PubSub), die einem Topic zugeordnet ist, eine Blockchain-Transaktion, die eway in Gegenrichtung eine Transaktion, die dnet ist, und die in einem Glied bestätigt ist, der validiert ist, als PubSub-Message Abonnenten (Geräte einer Gruppe) als PubSub-Message bereitstellen, die als Topic den Suchbegriff der Blockchain-Transaktion aufweist. Vorzugsweise kann im Gateway oder auch in einem der Knoten BCN eine Vorrichtung (nicht dargestellt) implementiert sein, die mittels einer integrierten bzw. (remote) gekoppelten Filterungseinrichtung die Transaktionen filtert. Die Filterung kann mit Hilfe des oben beschriebenen Publish-Subscribe-Ansatzes geschehen. Durch das Topic (weiterer Suchbegriff) wird ein Filterkriterium bestimmt, mit Hilfe dessen die gefilterten Transaktionen bzw. Transaktionsdatensätze bereitgestellt und an Geräte z.B. IoT oder andere Knoten BCN weitergegeben werden können.

Dabei kann eine 1:1-Zuordnung des Blockchain-Suchbegriffs zu den PubSub-Topics (weitere Suchbegriffe s.o) erfolgen, d.h. die Begriffe sind identisch. Eine Zuordnung von Blockchain-Suchbegriffen zu PubSub-Topics und umgekehrt kann auch über eine Tabelle Tab, die in das Gateway G integriert sein kann, erfolgen. Dies hat den Vorteil, dass eine Blockchain-Infrastruktur einfach von IoT-Geräten bzw. Industrie-4.0-Geräten z.B. FD1, FD2 verwendet werden kann, ohne dass die Geräte selbst die Blockchain-Technologie unterstützen müssen. Sie können über PubSub-Protokolle, die im IoT-Umfeld verwendet werden können, auf Blockchains zugreifen. Ein Topic (weiterer Suchbegriff) kann von einem Gerät z.B. über eine Benutzerschnittstelle festgelegt und abonniert werden kann und/oder von einem Gerät z.B. FD3 als Projektierungsdaten (z.B. Anwendungsgebiet: Industrie 4.0, Anlage: Umspannwerk, Gerät x im Umspannwerk, Region: München Land, Betreiber: Eon etc.) vorgegeben sein. Dazu wird eine Transaktion einem Topic zugeordnet (z.B. durch ein (Sortier-)Attribut). Ein Topic kann hierbei hierarchisch strukturiert sein (Topic Tree), z.B. topic1.topic2.topic3 (siehe auch oben). Als Topic können beispielsweise Namespaces genutzt werden, um die Gruppenkommunikation für ein bestimmtes Thema entsprechend nutzen zu können. Ein Beispiel ist ein Virtuelles Kraftwerk (VPP - Virtual Power Plant) von der Fa. Eon im Bereich München-Land (M-Land), das eine separate Gruppe für die Kommunikation von Einspeisereduzierungen besitzt: VPP.eon.M-Land.Poing.reduce_infeed (siehe Fig. 2).

Das Sortierkriterium oder die Mehrzahl von Sortierattributen können explizit z.B. administrativ vorgegeben werden oder implizit abhängig der Transaktion bestimmt werden. Es kann ein Hash-Wert des Smart Contracts oder eines Teils des Smart Contracts gebildet und als Sortierkriterium verwendet werden.
der Kommunikationsanordnung (siehe Fig. 3) kann ein Knoten BCN auch als Blockchain-Orakel ausgebildet sein. Durch sogenannte Blockchain-Orakel können als vertrauenswürdig geltende Knoten Information über die reale Welt in eine Blockchain-Transaktion kodieren und somit Information aus der realen Welt für Smart Contracts der Blockchain zugänglich machen. (https://blog.ledger.co/hardware-oracles-bridging-the-real-world-to-the-blockchainca97c2fc3e6c#.
lu511vbrd).

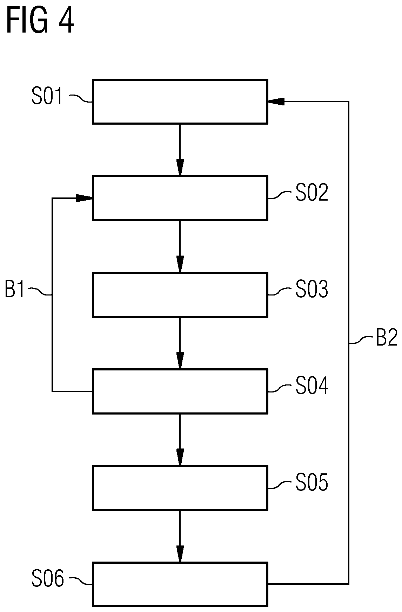

In Figur 4 ist ein Ablaufdiagramm zum erfindungsgemäßen Verfahren gezeigt. Da es sich bei einer Blockchain bzw. Blocckette um eine dezentrale, verteilte Datenbank handelt, ist normalerweise die Kommunikation mit einem der Mehrzahl von gleichartigen Blockchainknoten, in Figur 3 beispielsweise BCN, möglich.

Das Verfahren weist dabei folgende Schritte auf:
S01: Bilden eines oder mehrerer (zweiter) Gliedes/Glieder einer Blockkette, welches mit einem ersten Glied derselben oder einer weiteren Blockkette verkettet worden ist oder verkettet wird. Wie vorstehend schon erwähnt, kann es sich bei dem ersten Glied um ein Startglied und/oder Genesisglied (Ursprungsglied) handeln.
S02: Festlegen mindestens eines Suchbegriffs im zweiten Glied bzw. jedem zweiten Glied oder Auslesen mindestens eines zuvor festgelegten Suchbegriffs, welchen das zweite Glied umfasst. Die Suchbegriffe sind vorstehend bereits erläutert worden;
S03: Auswählen eines Transaktionsdatensatzes aus der Menge M (siehe z.B. Fig. 1) der unsortierten Transaktionsdatensätze, wobei der ausgewählte Transaktionsdatensatz auf Integrität geprüft worden ist; und
S04: Zuordnen des ausgewählten Transaktionsdatensatzes zu dem festgelegten oder ausgelesenen Suchbegriff oder zu einem der festgelegten oder ausgelesenen Suchbegriffe;
B1: Wiederholen der Schritte S02 bis S04 bis eine vorgebbare Anzahl an auszuwählender Transaktionsdatensätze erreicht ist und/oder die Menge der unsortierten Transaktionsdatensätze leer ist;
S05: Semantisches Sortieren der ausgewählten und zugeordneten Transaktionsdatensätze anhand eines vorgebbaren Sortierkriteriums, wobei die zugeordneten Suchbegriffe in eine dem Sortierkriterium entsprechende Reihenfolge gebracht werden, und
S06: Bilden der Menge der kryptographisch geschützten und semantisch sortierten Transaktionsdatensätzen mit Hilfe der genannten Reihenfolge.
B2: Das Verfahren wird beginnend mit S01 solange wiederholt, bis eine ausreichende Länge der Blockkette bzw. eine vorgebbare bzw. vordefinierte Anzahl an Gliedern in der Blockkette gebildet sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.
[1]
   Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8]
   Blockchain Oracles https://blockchainhub.net/blockchain-oracles/
   Stand 14.03.2018

## Patentansprüche

1. Verfahren zum Bilden einer Menge von kryptographisch geschützten und semantisch sortierten Transaktionsdatensätzen eines verteilten Datenbanksystems aus einer Menge von unsortierten Transaktionsdatensätzen, aufweisend folgende Schritte :
a) Bilden zumindest eines zweiten Datenblockes (B11) eines verteilten Datenbanksystems, welches mit einem ersten Datenblock (B10) desselben oder eines weiteren verteilten Datenbanksystems verkettet worden ist oder verkettet wird, wobei die Datenblöcke an zumindest einen Knoten übertragen werden,
b) Festlegen mindestens eines Suchbegriffs im zweiten Datenblock oder Auslesen mindestens eines zuvor festgelegten Suchbegriffs, welchen den zweiten Datenblock umfasst,
c) Auswählen eines Transaktionsdatensatzes (Tx0) aus der Menge (M) der unsortierten Transaktionsdatensätze (Tx0 bis Tx6), wobei der ausgewählte Transaktionsdatensatz auf Integrität geprüft worden ist,
d) Zuordnen des ausgewählten Transaktionsdatensatzes (Tx0) zu dem festgelegten oder ausgelesenen Suchbegriff oder zu einem der festgelegten oder ausgelesenen Suchbegriffe,
e) Wiederholen der Schritte b) bis d) bis eine vorgebbare Anzahl an auszuwählender Transaktionsdatensätze erreicht ist und/oder die Menge der unsortierten Transaktionsdatensätze leer ist,
f) Semantisches Sortieren der ausgewählten und zugeordneten Transaktionsdatensätze anhand eines vorgebbaren Sortierkriteriums, wobei die zugeordneten Suchbegriffe in eine dem Sortierkriterium entsprechende Reihenfolge gebracht werden, und
g) Bilden der Menge der kryptographisch geschützten und semantisch sortierten Transaktionsdatensätzen (Tx2, Tx1, Tx0, Tx3) mit Hilfe der genannten Reihenfolge.

2. Verfahren nach dem vorhergehenden Anspruch, **dadurch gekennzeichnet, dass** bei mehreren festgelegten oder ausgelesenen Suchbegriffen in dem zweiten Datenblock (B11) diese in einem Suchbaum (TT) angeordnet werden, wobei die Suchbegriffe die Knoten des Suchbaums bilden.

3. Verfahren nach einem der vorhergehenden Ansprüche, **dadurch gekennzeichnet, dass** ein Suchbegriff aus einem Oberbegriff und mehreren Unterbegriffen gegebenenfalls jeweils getrennt durch ein Trennzeichen zusammengesetzt wird.

4. Verfahren nach dem vorhergehenden Anspruch, **dadurch gekennzeichnet, dass** der Suchbegriff hierarchisch mit dem Oberbegriff im Wurzelknoten des Suchbaums bis zu einem am weitetesten untergeordneten Unterbegriff im Blattknoten des Suchbaums angeordnet wird und gegebenenfalls ein Trennzeichen eine zwischen den zugehörigen Knoten liegende Kante des Suchbaums kennzeichnet.

5. Vorrichtung zum Bereitstellen einer Menge von kryptographisch geschützten und gefilterten Transaktionsdatensätzen aus einer Menge von auf Integrität geprüften und semantisch sortierten Transaktionsdatensätzen (Tx2, Tx1, Tx0, Tx3) eines Datenblockes (B10, B11) eines verteilten Datenbanksystems, wobei die Menge nach dem Verfahren nach einem der vorhergehenden Verfahrensansprüche gebildet ist, aufweisend:
- Bereitstellungsmittel zum Bereitstellen zumindest eines solchen Datenblockes eines verteilten Datenbanksystems und
- Kopplungsmittel zur Kopplung der Bereitstellungsmittel mit einer Filterungseinrichtung, welche die Menge von gefilterten Transaktionsdatensätzen aus der Menge der geprüften und semantisch sortierten Transaktionsdatensätzen des verteilten Datenbanksystems mit Hilfe eines Filterkriteriums ermittelt, und
- Ausgabemittel zum Bereitstellen der ermittelten Menge von gefilterten Transaktionsdatensätzen.

6. Filterungseinrichtung ausgebildet zur Kopplung mit den Bereitstellungsmitteln der Vorrichtung nach dem vorhergehenden Anspruch, **gekennzeichnet durch** Ermittlungsmittel zum Ermitteln einer Menge von gefilterten Transaktionsdatensätzen aus der Menge der auf Integrität geprüften und sortierten Transaktionsdatensätzen (Tx2, Tx1, Tx0, Tx3) eines verteilten Datenbanksystems (B11) mit Hilfe des Filterkriteriums.

7. Filterungseinrichtung nach dem vorhergehenden Anspruch, **dadurch gekennzeichnet, dass** das Filterkriterium mit Hilfe eines weiteren Suchbegriffs und/oder zumindest eines Teils des weiteren Suchbegriffes festlegbar ist, welcher mit dem Suchbegriff in dem bereitgestellten Datenblock des verteilten Datenbanksystems identisch ist oder von diesem ableitbar ist oder abgeleitet ist.

8. Zugangseinheit (G) umfassend eine Filterungseinrichtung nach Anspruch 7, **dadurch gekennzeichnet, dass** der weitere Suchbegriff von einem Gerät (IoT) oder mehreren Geräten (IoTC, FD1, FD2, FD3) einer Gruppe (AN) festlegbar und/oder insofern abonnierbar ist, dass die dem Suchbegriff zugeordneten Transaktionsdatensätze von diesen abonniert werden, und nur die Datenblöcke des verteilten Datenbanksystems an das Gerät oder die mehreren Geräte weitergereicht werden, welche die festgelegten und/oder abonnierten Transaktionsdatensätze aufweisen.

9. Kommunikationsnetzanordnung umfassend folgende Komponenten:
- zumindest einen ein verteiltes Datenbanksystem verarbeitenden Netz-Knoten (BCN), welcher jeweils eine Vorrichtung nach Anspruch 5 aufweist,
- ein (IoT) oder mehrere Geräte (IoTC, FD1, FD2, FD3), die einer Gruppe (AN) zugeordnet sind,
- wenigstens eine Filterungseinrichtung nach Anspruch 6 oder Anspruch 7 oder wenigstens eine Zugangseinheit (G) nach dem vorhergehenden Zugangseinheitsanspruch, und
- umfassend eine Netzwerkinfrastruktur (N), mit Hilfe derer die genannten Komponenten miteinander kommunizieren können.

10. Kommunikationsanordnung nach dem vorhergehenden Anspruch, **dadurch gekennzeichnet, dass** in der Netzwerkinfrastruktur (N) ein sogenanntes Publish-Subscribe-Protokoll angewendet werden kann, bei dem die Filterungseinrichtung dazu ausgelegt ist, dem einen oder mehreren Geräten der Gruppe das Abonnieren und/oder Festlegen von Suchbegriffen zu ermöglichen.

11. Computerprogrammprodukt mit Programmbefehlen für einen ein verteiltes Datenbanksystem verarbeitenden Netz-Knoten (BCN), der mittels der Programmbefehle konfiguriert wird, die zum Ausführen des Verfahrens nach einem der vorangehenden Verfahrensansprüche 1-4 ausgebildet sind.

## Claims

1. Method for forming a set of cryptographically protected and semantically sorted transaction datasets of a distributed database system from a set of unsorted transaction datasets, comprising the following steps:
a) forming at least one second data block (B11) of a distributed database system that has been chained or is chained to a first data block (B10) thereof or of a further distributed database system, wherein the data blocks are transmitted to at least one node,
b) defining at least one search term in the second data block or reading at least one previously defined search term that the second data block contains,
c) selecting a transaction dataset (Tx0) from the set (M) of unsorted transaction datasets (Tx0 to Tx6), wherein the selected transaction dataset has been checked for integrity,
d) assigning the selected transaction dataset (Tx0) to the defined or read search term or to one of the defined or read search terms,
e) repeating steps b) to d) until a predefinable number of transaction datasets to be selected is reached and/or the set of unsorted transaction datasets is empty,
f) semantically sorting the selected and assigned transaction datasets on the basis of a predefinable sorting criterion, wherein the assigned search terms are put in an order corresponding to the sorting criterion, and
g) forming the set of cryptographically protected and semantically sorted transaction datasets (Tx2, Tx1, Tx0, Tx3) using said order.

2. Method according to the preceding claim, **characterized in that**, in the case of a plurality of defined or read search terms in the second data block (B11), these are arranged in a search tree (TT), wherein the search terms form the nodes of the search tree.

3. Method according to either of the preceding claims, **characterized in that** a search term is formed from a main term and a plurality of sub-terms, possibly in each case separated by a separation symbol.

4. Method according to the preceding claim, **characterized in that** the search term is arranged hierarchically with the main term in the root node of the search tree as far as a furthestaway subordinate sub-term in the leaf node of the search tree and a separation symbol possibly identifies an edge of the search tree situated between the associated nodes.

5. Device for providing a set of cryptographically protected and filtered transaction datasets from a set of integrity-checked and semantically sorted transaction datasets (Tx2, Tx1, Tx0, Tx3) of a data block (B10, B11) of a distributed database system, wherein the set is formed according to the method according to one of the preceding method claims, having:
- provision means for providing at least one such data block of a distributed database system and
- coupling means for coupling the provision means to a filtering apparatus that determines the set of filtered transaction datasets from the set of checked and semantically sorted transaction datasets of the distributed database system using a filtering criterion, and
- output means for providing the determined set of filtered transaction datasets.

6. Filtering apparatus designed to be coupled to the provision means of the device according to the preceding claim, **characterized by** determination means for determining a set of filtered transaction datasets from the set of integrity-checked and sorted transaction datasets (Tx2, Tx1, Tx0, Tx3) of a distributed database system (B11) using the filtering criterion.

7. Filtering apparatus according to the preceding claim, **characterized in that** the filtering criterion is able to be defined using a further search term and/or at least part of the further search term that is identical to the search term in the provided data block of the distributed database system or is able to be derived therefrom or is derived therefrom.

8. Access unit (G) comprising a filtering apparatus according to Claim 7, **characterized in that** the further search term is able to be defined by a device (IoT) or a plurality of devices (IoTC, FD1, FD2, FD3) of a group (AN) and/or is able to be subscribed to such that the transaction datasets assigned to the search term are subscribed to thereby, and only the data blocks of the distributed database system that contain the defined and/or subscribed-to transaction datasets are forwarded to the device or the plurality of devices.

9. Communication network arrangement comprising the following components:
- at least one network node (BCN) processing a distributed database system and that in each case has a device according to Claim 5,
- one (IoT) or more devices (IoTC, FD1, FD2, FD3) that are assigned to a group (AN),
- at least one filtering apparatus according to Claim 6 or Claim 7 or at least one access unit (G) according to the preceding access unit claim, and
- comprising a network infrastructure (N) by way of which said components are able to communicate with one another.

10. Communication arrangement according to the preceding claim, **characterized in that** what is known as a publish-subscribe protocol is able to be applied in the network infrastructure (N), in which the filtering apparatus is designed to allow the one or more devices of the group to subscribe to and/or define search terms.

11. Computer program product containing program commands for a network node (BCN) processing a distributed database system and that is configured by way of the program commands that are designed to execute the method according to one of preceding method Claims 1-4.

## Revendications

1. Procédé de formation d'une quantité d'ensembles de données de transaction, protégés de manière cryptographique et triés de manière sémantique, d'un système de base de données distribué à partir d'une quantité d'ensembles de données non triés, comprenant les étapes suivantes :
a) formation d'au moins un deuxième bloc de données (B11) d'un système de base de données distribué, qui a été concaténé ou est concaténé avec un premier bloc de données (B10) du même ou d'un autre système de base de données distribué, dans lequel les blocs de données sont transmis à au moins un nœud,
b) spécification d'au moins un terme de recherche dans le deuxième bloc de données ou lecture d'au moins un terme de recherche déterminé auparavant, qui comprend le deuxième bloc de données,
c) sélection d'un ensemble de données de transaction (Tx0) à partir de la quantité (M) des ensembles de données de transaction non triés (Tx0 à Tx6), dans lequel l'ensemble de données de transaction sélectionné est vérifié en ce qui concerne son intégrité,
d) attribution de l'ensemble de données de transaction (Tx0) au terme de recherche déterminé ou lu ou à un des termes de recherche déterminés ou lus,
e) répétition des étapes b) à d) jusqu'à ce qu'un nombre prédéterminé d'ensembles de données de transaction à sélectionner soit atteint et/ou la quantité d'ensembles de données de transaction non triés soit vide,
f) tri sémantique des ensembles de données de transaction sélectionnés et attribués à l'aide d'un critère de tri prédéterminé, dans lequel les termes de recherche attribués sont mis dans un ordre correspondant au critère de tri et
g) formation de la quantité d'ensembles de données de transaction protégés de manière cryptographique et triés de manière sémantique (Tx2, Tx1, Tx0, Tx3) à l'aide de l'ordre mentionné.

2. Procédé selon l'une des revendications précédentes, **caractérisé en ce que**, pour plusieurs termes de recherche déterminés ou lus dans le deuxième bloc de données (B11), ceux-ci sont disposés dans un arbre de recherche (TT), dans lequel les termes de recherche constituent les nœuds de l'arbre de recherche.

3. Procédé selon l'une des revendications précédentes, **caractérisé en ce qu'**un terme de recherche est composé d'un terme principal et de plusieurs termes secondaires, le cas échéant séparés par un caractère de séparation.

4. Procédé selon la revendication précédente, **caractérisé en ce que** le terme de recherche est disposé hiérarchiquement avec le terme principal dans le nœud de racine de l'arbre de recherche jusqu'à un terme secondaire le plus bas dans la hiérarchie dans le nœud de feuille de l'arbre de recherche et, le cas échéant, un caractère de séparation identifie un bord, situé entre les nœuds correspondants, de l'arbre de recherche.

5. Dispositif pour la mise à disposition d'une quantité d'ensembles de données de transaction, protégés de manière cryptographique et filtrés à partir d'une quantité d'ensembles de données de transaction vérifiés en ce qui concerne leur intégrité et triés de manière sémantique (Tx2, Tx1, Tx0, Tx3) d'un bloc de données (B10, B11) d'un système de base de données distribué, dans lequel la quantité est formée selon le procédé selon l'une des revendications précédentes, comprenant :
- des moyens de mise à disposition pour la mise à disposition d'au moins un tel bloc de données d'un système de base de données distribué et
- des moyens de couplage pour le couplage des moyens de mise à disposition avec un dispositif de filtrage, qui détermine la quantité d'ensembles de données de transaction filtrés à partir de la quantité d'ensembles de données de transaction vérifiés et triés sémantiquement du système de base de données distribué à l'aide d'un critère de filtrage et
- des moyens de sortie pour la mise à disposition de la quantité déterminée d'ensembles de données de transaction filtrés.

6. Dispositif de filtrage conçu pour le couplage avec les moyens de mise à disposition du dispositif selon la revendication précédente, **caractérisé par** des moyens de détermination pour la détermination d'une quantité d'ensemble de données de transaction filtrés à partir de la quantité d'ensembles de données de transaction vérifiés en ce qui concerne leur intégrité et triés (Tx2, Tx1, Tx0, Tx3) d'un système de base de données distribué (B11) à l'aide du critère de filtrage.

7. Dispositif de filtrage selon la revendication précédente, **caractérisé en ce que** le critère de filtrage peut être spécifié à l'aide d'un autre terme de recherche et/ou d'au moins une partie de l'autre terme de recherche, qui est identique au terme de recherche dans le bloc de données mis à disposition du système de base de données distribué ou peut être déduit ou est déduit de celui-ci.

8. Unité d'accès (G) comprenant un dispositif de filtrage selon la revendication 7, **caractérisée en ce que** l'autre terme de recherche peut être spécifié par un appareil (IoT) ou plusieurs appareils (IoTC, FD1, FD2, FD3) d'un groupe (AN) et/ou abonné dans la mesure où les ensembles de données de transaction correspondant au terme de recherche sont abonnés par ceux-ci et seuls les blocs de données du système de base de données distribué qui comprennent les ensembles de données spécifiés et/ou abonnés sont transférés à l'appareil ou aux plusieurs appareils.

9. Disposition de réseau de communication comprenant les composants suivants :
- au moins un nœud de réseau (BCN) traitant un système de base de données distribué, qui comprend un dispositif selon la revendication 5,
- un appareil (IoT) ou plusieurs appareils (IoTC, FD1, FD2, FD3), qui correspondent à un groupe (AN),
- au moins un dispositif de filtrage selon la revendication 6 ou la revendication 7 ou au moins une unité d'accès (G) selon la revendication précédente concernant une unité d'accès et
- comprenant une infrastructure de réseau (N) à l'aide de laquelle les composants mentionnés peuvent communiquer entre eux.

10. Disposition de communication selon la revendication précédente, **caractérisée en ce que**, dans l'infrastructure de réseau (N), est appliqué ce qu'on appelle un protocole Publish-Suscribe, dans lequel le dispositif de filtrage est conçu pour permettre, à l'appareil ou aux plusieurs appareils du groupe, l'abonnement et/ou la spécification de termes de recherche.

11. Produit de programme informatique avec des instructions de programme pour un nœud de réseau (BCN) traitant un système de base de données distribué, qui est configuré au moyen des instructions de programme, qui sont conçues pour l'exécution du procédé selon l'une des revendications précédentes 1 - 4.
